# EUROPÄISCHE PATENTANMELDUNG

(11) **EP 3 945 232 A1**
(43) Veröffentlichungstag der Anmeldung: **02.02.2022**
(21) Anmeldenummer: 21174682.1
(22) Anmeldetag: 19.05.2021
(51) Int. Cl.: F16K 31/06, F16K 31/08, F01P 7/14, F16K 37/00, F16K 27/04

(54) **VERSTELLEINHEIT FÜR EIN VENTIL FÜR EIN KRAFTFAHRZEUG**

(30) Priorität: 30.07.2020 AT 5015220 U
(71) Anmelder: MSG Mechatronic Systems GmbH, 8551 Wies (AT)
(72) Erfinder: Schöner, Gerhard, 8530 Deutschlandsberg (AT)
(74) Vertreter: Wirnsberger & Lerchbaum Patentanwälte OG

(57) **Zusammenfassung**

Die Erfindung betrifft eine Verstelleinheit für ein Ventil (1) für ein Kraftfahrzeug, insbesondere für einen Kühlmittelkreislauf in einem Kraftfahrzeug, wobei das Ventil (1) ein Gehäuse (2) mit einem Hohlraum (3) aufweist, in welchen ein Einlass (4) und ein Auslass (5) münden, wobei der Einlass (4) mit dem Auslass (5) in einem geöffneten Zustand des Ventils (1) durch einen durch den Hohlraum (3) verlaufenden Strömungspfad (6) verbunden ist, wobei das Ventil (1) eine zwischen dem Einlass (4) und dem Auslass (5) entlang des Strömungspfades (6) im Hohlraum (3) angeordnete Ventilöffnung (7) und einen Verschluss (8) aufweist, welcher Verschluss (8) relativ zum Gehäuse (2) des Ventils (1) von einer ersten Position in eine zweite Position bewegbar ist, wobei der Verschluss (8) die Ventilöffnung (7) in der ersten Position zu einem geringeren Grad als in der zweiten Position verschließt, wobei die Verstelleinheit zum Bewegen des Verschlusses (8) mittels eines Mitnehmerstückes (9) ausgebildet ist. Um eine besonders effiziente Betätigung zu erreichen, ist erfindungsgemäß vorgesehen, dass die Verstelleinheit einen mit dem Mitnehmerstück (9) verbundenen Kolben (10) aufweist, welcher zwischen einer ersten Endposition und einer zweiten Endposition entlang eines Verstellweges (11) bewegbar ist, wobei zumindest ein Permanentmagnet (12) vorgesehen ist, durch welchen der Kolben (10) gehalten wird, wenn sich der Kolben (10) in einer der Endpositionen befindet, wobei ferner eine Spule vorgesehen ist und der Kolben (10) durch Bestromung der Spule von einer Endposition weg bewegt werden kann, um das Ventil (1) zumindest teilweise zu öffnen oder zu schließen.

## Beschreibung

Die Erfindung betrifft eine Verstelleinheit für ein Ventil für ein Kraftfahrzeug, insbesondere für einen Kühlmittelkreislauf in einem Kraftfahrzeug, wobei das Ventil ein Gehäuse mit einem Hohlraum aufweist, in welchen ein Einlass und ein Auslass münden, wobei der Einlass mit dem Auslass in einem geöffneten Zustand des Ventils durch einen durch den Hohlraum verlaufenden Strömungspfad verbunden ist, wobei das Ventil eine zwischen dem Einlass und dem Auslass entlang des Strömungspfades im Hohlraum angeordnete Ventilöffnung und einen Verschluss aufweist, welcher Verschluss relativ zum Gehäuse des Ventils von einer ersten Position in eine zweite Position bewegbar ist, wobei der Verschluss die Ventilöffnung in der ersten Position zu einem geringeren Grad als in der zweiten Position verschließt, wobei die Verstelleinheit zum Bewegen des Verschlusses des Ventils mittels eines Mitnehmerstückes ausgebildet ist.

Aus dem Stand der Technik sind verschiedene Ventile für Kraftfahrzeuge bekannt geworden, welche beispielsweise in einem Kühlmittelkreislauf des Fahrzeuges eingesetzt werden, um abhängig von einer Temperatur eines Kühlmittels wie insbesondere Wasser, hydraulische Aggregate in einem hydraulischen Kreis zu- bzw. wegzuschalten. Derartige Ventile werden mit Verstelleinheiten betätigt, welche häufig in die Ventile integriert sind und zumeist einen Elektromagneten aufweisen.

Nachteil bei Ventilen des Standes der Technik ist, dass ein Energiebedarf zur Betätigung, also zum Öffnen oder Schließen des Ventils, sowie zum Halten einer Ventilstellung groß ist.

Aufgabe der Erfindung ist es daher, eine Verstelleinheit der eingangs genannten Art anzugeben, mit welcher ein Ventil für ein Kraftfahrzeug auf effizientere Weise betrieben werden kann.

Diese Aufgabe wird erfindungsgemäß durch eine Verstelleinheit der eingangs genannten Art gelöst, welche einen mit dem Mitnehmerstück verbundenen Kolben aufweist, welcher zwischen einer ersten Endposition und einer zweiten Endposition entlang eines Verstellweges bewegbar ist, wobei zumindest ein Permanentmagnet vorgesehen ist, durch welchen der Kolben gehalten wird, wenn sich der Kolben in einer der Endpositionen befindet, wobei ferner eine Spule vorgesehen ist und der Kolben durch Bestromung der Spule von einer Endposition wegbewegt werden kann, um das Ventil zumindest teilweise zu öffnen oder zu schließen.

Im Rahmen der Erfindung wurde erkannt, dass ein Energieverbrauch stark reduziert werden kann, wenn der Kolben, welcher über das Mitnehmerstück mit dem Verschluss des Ventils verbunden sein kann, nicht durch elektrisch erzeugte Magnetkräfte in den Endpositionen gehalten werden muss, sondern einer oder mehrere Permanentmagnete vorgesehen sind, welche den Verschluss über den Kolben in den Endpositionen halten können. Es ist dann nur eine Energiezufuhr erforderlich, um den Kolben aus einer der Endpositionen zu lösen und diesen in die andere Endposition zu bewegen, um das Ventil zu schalten. Ein derartiger Aufbau kann auch als bistabil bezeichnet werden.

Günstig ist es, wenn der zumindest eine Permanentmagnet und der Kolben derart ausgestaltet sind, dass der Kolben mit einer Kraft, welche zumindest der 10-fachen Gewichtskraft des Kolbens entspricht, insbesondere mit einer Kraft, welche zumindest der 20-fachen Gewichtskraft des Kolbens entspricht, in einer Endposition gehalten wird. Dadurch ergibt sich auch bei Vibrationen eine stabile Positionierung des Kolbens in den Endpositionen bzw. eine stabile Schaltstellung des Ventils auch bei Erschütterungen des Fahrzeuges, in welches ein mit einer entsprechenden Verstelleinheit ausgebildetes Ventil eingebaut ist. Dadurch ist die Verstelleinheit auch für einen Einsatz in Fahrzeugen geeignet, welche großen Beschleunigungen ausgesetzt sein können, beispielsweise Geländefahrzeugen oder dergleichen, zumal eine Ventilposition auch dann ausschließlich durch Permanentmagnetkräfte gewährleistet ist, wenn entsprechend hohe Beschleunigungen auf das Ventil bzw. die Verstelleinheit wirken.

Grundsätzlich könnte auch der Kolben selbst durch einen Permanentmagnet gebildet sein oder einen Permanentmagnet aufweisen. In der Regel weist der Kolben ein magnetisches, insbesondere ein ferromagnetisches Material auf oder ist durch ein solches Material gebildet, um mit einem oder mehreren starr mit der Spule verbundenen Permanentmagneten zusammenzuwirken.

Ein Halten des Kolbens in den Endpositionen kann grundsätzlich auf verschiedenste Weisen erfolgen. Ein besonders einfacher und robuster Aufbau wird erreicht, wenn ein erster magnetischer Kreis vorgesehen ist, welcher durch den Kolben geschlossen wird, wenn sich der Kolben in der ersten Endposition befindet, und ein zweiter magnetischer Kreis vorgesehen ist, welcher durch den Kolben geschlossen wird, wenn sich der Kolben in der zweiten Endposition befindet. Die magnetische Spannung wird dabei üblicherweise durch einen oder mehrere Permanentmagnete verursacht.

Um Kosten und Gewicht einer entsprechenden Verstelleinheit zu reduzieren, ist bevorzugt vorgesehen, dass der erste magnetische Kreis und der zweite magnetische Kreis einen gemeinsamen Permanentmagneten aufweisen. Die durch den Permanentmagnet bereitgestellte magnetische Spannung bzw. Durchflutung wird dann für beide Kreise genutzt. Entsprechend ist der Permanentmagnet dann sowohl mit der ersten Endposition als auch mit der zweiten Endposition magnetisch über einen ersten Weg verbunden, in der Regel über Bauteile, welche eine relative Permeabilitätszahl von 300 bis 10.000 aufweisen, und kann eine magnetische Verbindung zwischen dem Permanentmagnet und der ersten Endposition bzw. der zweiten Endposition auf einem zweiten Weg mittels des Kolbens hergestellt werden, wenn sich der Kolben in der ersten Endposition bzw. in der zweiten Endposition befindet, um den jeweiligen magnetischen Kreis zu schließen.

Es versteht sich, dass die Spule in der Regel derart ausgebildet und in der Verstelleinheit angeordnet ist, dass durch eine Bestromung der Spule eine der durch den Permanentmagnet auf den Kolben in der Endposition wirkenden Kraft entgegen wirkendes Magnetfeld gebildet wird, sodass der in einer Endposition befindliche Kolben aus dieser Endposition, in welcher er durch eine vom Permanentmagnet bzw. gegebenenfalls mehrere vorgesehene Permanentmagneten gehalten wird, gelöst und in Richtung der jeweils anderen Endposition beschleunigt werden kann.

Um eine aktuelle Schaltstellung des Ventils auf besonders einfache und gleichzeitig genaue Weise erfassen zu können, ist bevorzugt vorgesehen, dass mit dem Mitnehmerstück ein weiterer Permanentmagnet verbunden ist, sodass eine Bewegung des Mitnehmerstückes entlang des Verstellweges eine Bewegung des weiteren Permanentmagneten bewirkt, wobei ein Sensor vorgesehen ist, mit welchem eine Position des weiteren Permanentmagneten erfassbar ist. Üblicherweise ist die Verstelleinheit derart ausgebildet, dass der Sensor außerhalb eines Gehäuses des Ventils angeordnet sein kann, sodass den Sensor mit einer Fahrzeugelektronik verbindende Leitungen nicht in einem Bereich des Gehäuses geführt werden müssen, welcher Bereich durch das Kühlmedium durchflossen wird.

Hierzu ist die Verstelleinheit in der Regel derart ausgebildet, dass der Sensor derart vom weiteren Permanentmagneten beabstandet ist, dass, wenn die Verstelleinheit mit dem Ventil verbunden ist, der weitere Permanentmagnet innerhalb des Hohlraumes und der Sensor außerhalb des Hohlraumes angeordnet sind.

Ein besonders platzsparender Aufbau wird erreicht, wenn der Kolben innerhalb der Spule bewegbar angeordnet ist. So ist der Kolben in der Regel als guter magnetischer Leiter, beispielsweise mit einer relativen Permeabilitätszahl von 300 bis 10.000, ausgebildet, wodurch dieser sowohl für ein Halten mittels eines Permanentmagneten in den Endpositionen als auch für eine Betätigung mittels eines mit der Spule erzeugten Magnetfeldes ausgebildet ist.

Üblicherweise ist die Verstelleinheit derart ausgebildet, dass der Kolben weder in der ersten Endposition noch in der zweiten Endposition in axialer Richtung außerhalb der Spule angeordnet ist, sodass eine kompakte Bauweise erreicht wird.

Um ein Halten des Kolbens in den Endpositionen mit nur einem einzigen Permanentmagnet auf einfache Weise zu erreichen, ist bevorzugt vorgesehen, dass die Spule zwei in axialer Richtung beabstandete Spulenteile aufweist, wobei zwischen den Spulenteilen der Permanentmagnet angeordnet ist, welcher magnetisch einerseits mit einem Teil des Verfahrweges, und somit mit dem Kolben, und andererseits über ein radial außerhalb der Spulenteile angeordnetes magnetisches Bauteil, insbesondere ein ferromagnetisches Bauteil, mit einem an der Endposition angeordneten ersten Polkern und/oder einem an der zweiten Endposition angeordneten zweiten Polkern verbunden ist. Das ferromagnetische Bauteil, welches üblicherweise ebenfalls eine relative Permeabilitätszahl von 300 bis 10.000 aufweist, kann beispielsweise als ein die Spule einschließender, rohrförmiger Mantel ausgebildet sein, welcher beispielsweise über axial an den Spulen endseitig angeordnete Polkernplatten mit mittig in den Spulen positionierten Polkernen, welche die Endpositionen definieren können, verbunden sein kann, um eine magnetische Verbindung herzustellen, welche in weiterer Folge mittels des in der Spule bewegbaren Kolbens geschlossen werden kann. Zur Erreichung eines besonders einfachen und kostengünstigen Aufbaues ist bevorzugt vorgesehen, dass der Kolben über in Polkernen angeordnete Lager translatorisch bewegbar gelagert ist. Dies kann beispielsweise mittels einer den Kolben durchdringenden oder mit dem Kolben verbundenen Achse erfolgen, welche Achse in den Lagern translatorisch entlang einer Spulenachse bewegbar ist und welche Achse auch das Mitnehmerstück mit dem Kolben verbinden kann.

Die Spulenteile sind in der Regel elektrisch verbunden, und zwar seriell, sodass bei Bestromung der Spule mit einem Strom in einer ersten Stromrichtung ein Magnetfeld in beiden Spulenteilen erzeugt wird, um den Kolben von einer ersten Endposition in die andere, zweite Endposition zu bewegen, in welcher der Kolben wieder durch einen Permanentmagnet gehalten wird, sodass keine weitere Bestromung der Spule erforderlich ist. Um den Kolben aus der zweiten Endposition in die erste Endposition zu bewegen, wird die Spule wieder bestromt, und zwar mit einem Strom, welcher eine der ersten Stromrichtung entgegengesetzte zweite Stromrichtung aufweist. Anders ausgedrückt wird die Spule umgepolt, um die Bewegungsrichtung des Kolbens zu ändern.

Günstig ist es, wenn eine Dichtung vorgesehen ist, welche den Kolben fluidisch von der Spule trennt, wenn die Verstelleinheit mit einem Ventil verbunden ist. Es ist dann sichergestellt, dass die Spule nicht in Kontakt mit dem Kühlmedium ist, wodurch beispielsweise ein elektrischer Kurzschluss vermieden ist. Der Kolben kann dann in der Kühlflüssigkeit bewegbar angeordnet sein. Bevorzugt ist der Kolben endseitig mit einem Konus ausgebildet, wobei ein korrespondierender Konus in den die Endpositionen üblicherweise definierenden Polkernen vorgesehen ist, um einen magnetischen Widerstand zu reduzieren.

Ein besonders einfacher Aufbau ergibt sich, wenn die Dichtung als tiefgezogene Dichthülse ausgebildet ist, welche innerhalb der Spule zwischen Spule und Kolben angeordnet ist, wobei die Dichtung bevorzugt aus einem Kunststoff ausgebildet ist. Beispielsweise kann die Dichthülse innerhalb der Spule eine zylindrische, einem Hohlraum in der Spule entlang der Spulenachse, in welchem der Kolben angeordnet werden kann, angepasste Form aufweisen. Die Dichthülse kann beispielsweise derart angeordnet sein, dass diese bei Verbindung der Verstelleinheit mit einem Ventil bis zu einem Gehäuse des Ventils ragt, sodass diese zwischen einem Gehäuse des Ventils und der Verstelleinheit bzw. einem Verstelleinheitgehäuse mittelbar oder unmittelbar gepresst werden kann, um eine Dichtwirkung zu erreichen.

Es hat sich bewährt, dass eine den Kolben mit dem Mitnehmerstück verbindende Achse vorgesehen ist, welche durch eine Ankerdichtung geführt und relativ zur Ankerdichtung, welche starr mit der Spule verbunden ist, entlang des Verstellweges bewegbar ist. Die Achse kann dann durch eine Dichtung geführt sein, wodurch ein Eindringen von Schmutzpartikeln in einem Bereich innerhalb der Spule vermieden werden kann, zumal entsprechende Partikel dann durch die Dichtung von der Achse abgestreift werden können. Über die Achse kann auch eine axiale Lagerung des Kolbens bzw. des Mitnehmerstückes umgesetzt werden, insbesondere wenn die Achse in in Polkernen angeordneten Lagern axial, translatorisch bewegbar gelagert ist.

Bei einem Ventil für ein Kraftfahrzeug, insbesondere für einen Kühlmittelkreislauf in einem Kraftfahrzeug, wobei das Ventil ein Gehäuse mit einem Hohlraum aufweist, in welchem ein Einlass und ein Auslass münden, wobei der Einlass mit dem Auslass in einem geöffneten Zustand des Ventils durch einen durch den Hohlraum verlaufenden Strömungspfad verbunden ist, wobei das Ventil eine zwischen dem Einlass und dem Auslass entlang des Strömungspfades im Hohlraum angeordnete Ventilöffnung und einen Verschluss aufweist, welcher Verschluss relativ zum Gehäuse des Ventils von einer ersten Position in eine zweite Position bewegbar ist, wobei der Verschluss die Ventilöffnung in der ersten Position zu einem geringeren Grad als in der zweiten Position verschließt, wobei eine Verstelleinheit zum Bewegen des Verschlusses mittels eines Mitnehmerstückes vorgesehen ist, ist es günstig, wenn die Verstelleinheit erfindungsgemäß ausgebildet ist. Es wird dann ein leichtgewichtiges, robustes und gleichzeitig mit geringem Energieaufwand betreibbares Ventil erreicht.

Üblicherweise ist die Verstelleinheit dabei derart ausgebildet und mit dem Gehäuse des Ventils verbunden, dass der Hohlraum fluidisch von elektrisch leitfähigen Teilen der Spule getrennt ist, insbesondere durch eine Dichthülse, welche zwischen dem Gehäuse des Ventils und dem Verstelleinheitgehäuse angeordnet ist.

Das Ventil kann als 3/2-Wegeventil oder als 2/2-Wegeventil ausgebildet sein.

Bevorzugt ist vorgesehen, dass die Verstelleinheit lösbar mit dem Gehäuse verbunden ist. Es ist dann ein einfacher Umbau des Ventils, beispielsweise von einem 3/2-Wegeventil auf ein 2/2-Wegeventil, möglich, indem lediglich der durch das Gehäuse definierte hydraulische Teil des Ventils getauscht wird, jedoch die Verstelleinheit beibehalten wird. Hierzu ist der Verschluss üblicherweise auch lösbar mit dem Mitnehmerstück verbunden, bevorzugt formschlüssig. Dadurch kann auch bei unterschiedlichen Ventilen ein hoher Gleichteilgrad erreicht werden, wodurch eine günstige Herstellbarkeit gewährleistet ist.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
- Fig. 1: eine Draufsicht auf ein erfindungsgemäßes Ventil;
- Fig. 2 und 3: verschiedene Schnittdarstellungen des in Fig. 1 dargestellten Ventils.

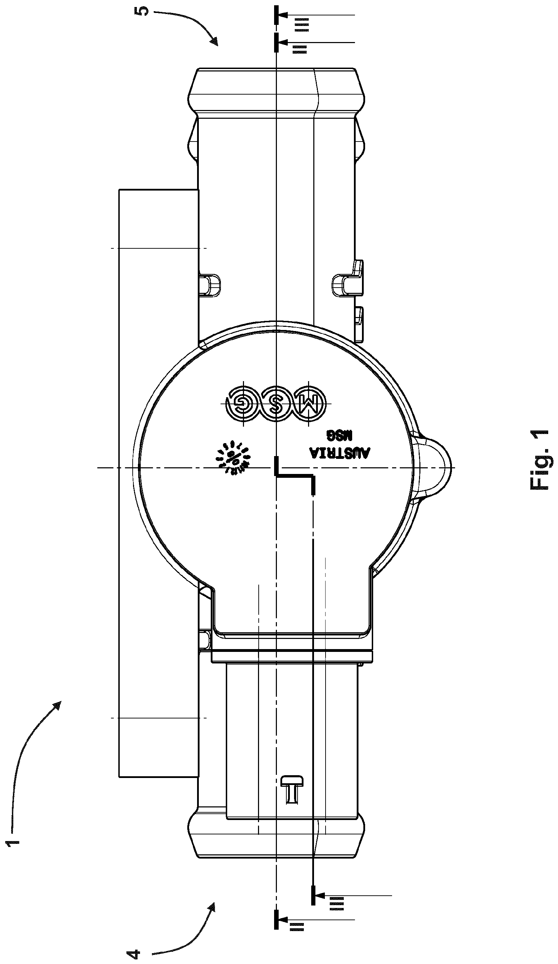

Fig. 1 zeigt ein erfindungsgemäßes Ventil 1 in Draufsicht. Das Ventil 1 weist einen Einlass 4 und zwei Auslässe 5 auf, welche je nach Ventilstellung wechselweise mit dem Einlass 4 hydraulisch verbunden bzw. vom Einlass 4 getrennt sind.

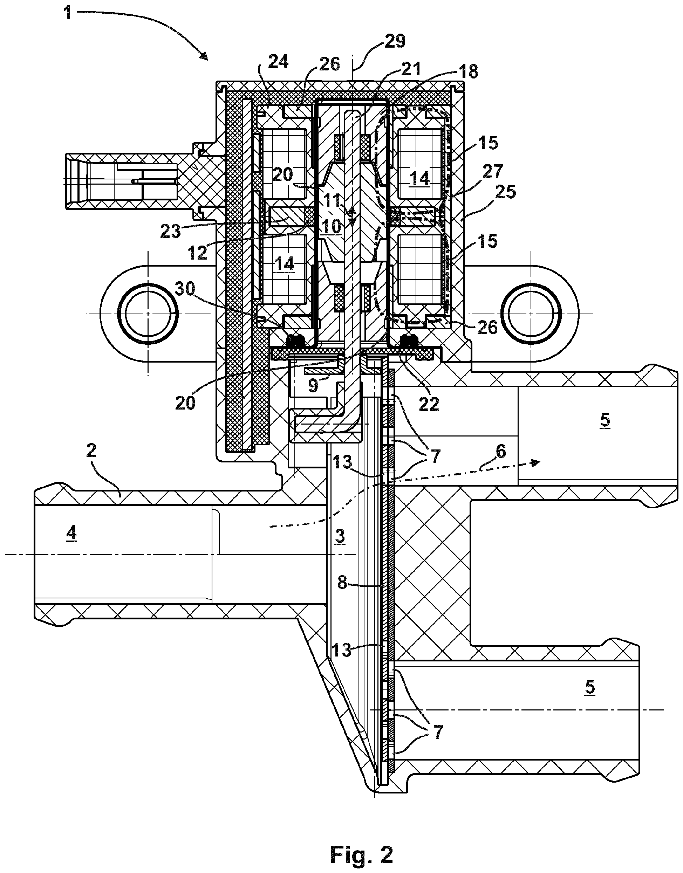

Fig. 2 zeigt eine Schnittdarstellung des in Fig. 1 dargestellten Ventils 1 samt Verstelleinheit entlang der Linie II-II in Fig. 1. Wie ersichtlich ist der Einlass 4 in der in Fig. 2 dargestellten Ventilstellung hydraulisch mit einem oberen Auslass 5 verbunden. So fluchten Verschlussöffnungen 13 im Verschluss 8 mit Ventilöffnungen 7 im oberen Bereich und ist der untere Auslass 5 hydraulisch vom Einlass 4 getrennt, zumal untere Ventilöffnungen 7 durch den Verschluss 8 bedeckt sind. Es ergibt sich somit ein Strömungspfad 6 wie dargestellt vom Einlass 4 zum oberen Auslass 5.

Eine Betätigung des Verschlusses 8, und somit des Ventils 1, ist über die Verstelleinheit möglich, welche eine in einem Verstelleinheitgehäuse 25 an einem Spulenkörper 24 angeordnete Spule, einen in der Spule zwischen zwei durch Polkerne 18 definierten Endpositionen bewegbar angeordneten Kolben 10 und eine Achse 21 aufweist, welche den Kolben 10 mit einem Mitnehmerstück 9 verbindet und über welche der Kolben 10 in Lagern 19 in den Polkernen 18 bewegbar gelagert ist. Der Verschluss 8 ist mit dem Mitnehmerstück 9 der Verstelleinheit verbunden, sodass der Verschluss 8 um den Verstellweg 11 des Kolbens 10 entlang der Spulenachse 29 bewegbar ist.

Der Kolben 10 wird in den Polkernen 18 durch einen hier ringförmig ausgebildeten Permanentmagnet 12 gehalten. Der Permanentmagnet 12 ist hierzu mit den Polkernen 18 einerseits über eine Leithülse 23, einen magnetisch gut leitfähigen Mantel 27 und magnetisch gut leitfähige Polkernplatten 26 verbunden. Unter magnetisch gut leitfähig wird hier ein Material mit einer relativen Permeabilitätszahl von 300 bis 10.000, insbesondere ein ferromagnetisches Material, verstanden. Der Spulenkörper 24 ist üblicherweise aus einem amagnetischen bzw. nicht magnetischen Material wie einem Kunststoff ausgebildet.

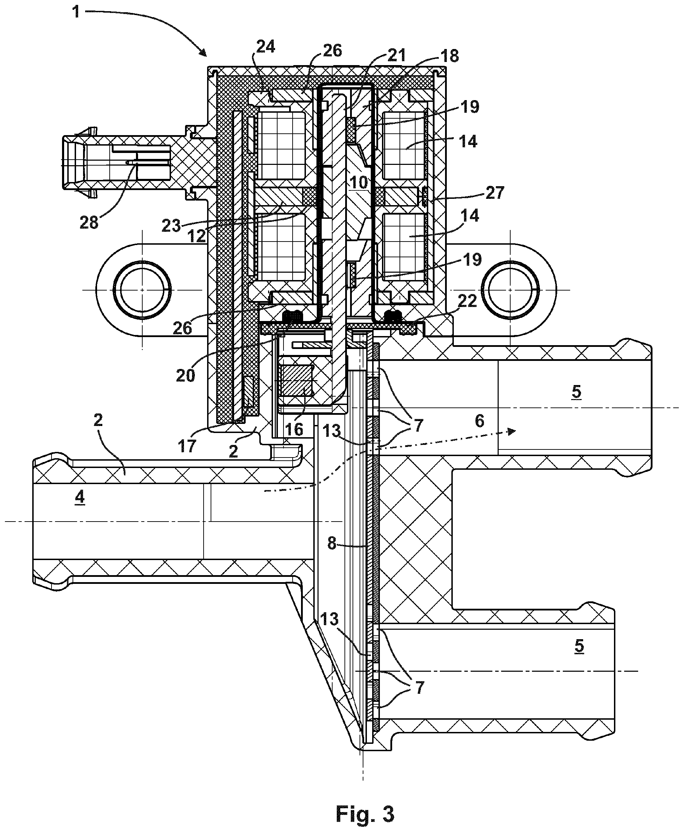

Andererseits kann eine magnetische Verbindung zwischen dem Permanentmagnet 12 und den Polkernen 18 über den Kolben 10 hergestellt werden, wenn sich der Kolben 10 in einer der Endpositionen befindet, sodass ein erster magnetischer Kreis 15 durch den Kolben 10 geschlossen wird, wenn sich der Kolben 10 wie in Fig. 2 und 3 dargestellt in der ersten Endposition befindet und ein zweiter magnetischer Kreis 15, welcher in der in Fig. 2 und 3 dargestellten Ventilstellung geöffnet ist, durch den Kolben 10 geschlossen wird, wenn sich der Kolben 10 in der zweiten Endposition befindet. Dadurch ist der Kolben 10 mittels des Permanentmagneten 12 stabil in jeder der Endpositionen fixierbar.

Der Permanentmagnet 12 ist in axialer Richtung etwa mittig in der Spule angeordnet, um in beiden möglichen magnetischen Kreisen 15 wirken zu können. Hierzu ist die Spule in zwei Spulenteile 14 geteilt, welche elektrisch seriell miteinander verbunden sind.

Um den Kolben 10 aus einer der Endpositionen zu lösen, wird die Spule kurz bestromt, sodass eine durch ein Magnetfeld der Spule erzeugte, auf den Kolben 10 wirkende Kraft entgegensetzt zu einer durch den Permanentmagnet 12 aufgebrachten Kraft wirkt und der Kolben 10 aus der jeweiligen Endposition heraus und zur anderen Endposition hin bewegt wird, in welcher der Kolben 10 wieder durch den Permanentmagnet 12 im jeweils anderen magnetischen Kreis 15 gehalten wird. Es ist somit für ein Schalten des Ventils 1 nur eine kurze Bestromung der Spule erforderlich, wonach der Verschluss 8 über den Kolben 10 stabil in der jeweiligen Position gehalten wird.

Wie ersichtlich ist dabei ein Raum, in welchem sich der Kolben 10 innerhalb der Spule bewegt, hydraulisch mit dem Hohlraum 3 des Ventils 1 verbunden, sodass sich der Kolben 10 in einem das Ventil 1 gegebenenfalls durchströmenden Kühlmedium bewegt. Die Spule ist dennoch hydraulisch vom Hohlraum 3 getrennt. Hierzu ist eine tiefgezogene Dichthülse 20 vorgesehen, welche den Kolben 10 von der Spule trennt.

Zwischen dem Gehäuse 2 des Ventils 1 und dem Verstelleinheitgehäuse 25 ist eine Ankerdichtung 22 angeordnet, um ein Eindringen von Verunreinigungen auf einfache Weise zu vermeiden. Die Ankerdichtung 22 weist mittig eine Öffnung auf, durch welche die Achse 21 geführt ist, sodass an dieser anhaftende Verunreinigungen durch die Ankerdichtung 22 abgestreift werden können, bevor diese zum Kolben 10 gelangen und eine Funktion desselben beeinträchtigen könnten.

Wie dargestellt erstreckt sich die Dichthülse 20 axial über die Spule hinaus und ist endseitig zwischen einem Gehäuse 2 des Ventils 1 und dem Verstelleinheitgehäuse 25 angeordnet. Dabei wird die Dichthülse 20 zwischen einem Dichtring 30, welcher mit dem Verstelleinheitgehäuse 25 verbunden ist, und der Ankerdichtung 22, welche mit dem Gehäuse 2 des Ventils 1 verbunden ist, leicht gepresst, um eine zuverlässige Dichtwirkung zu gewährleisten.

Wie in Fig. 3 ersichtlich ist mit dem Mitnehmerstück 9 ein weiterer Permanentmagnet 16 starr verbunden, welcher mit dem Mitnehmerstück 9 bzw. dem Verschluss 8 und dem Kolben 10 bewegt wird. Darüber hinaus ist an der Verstelleinheit ein Sensor 17 vorgesehen, welcher sich außerhalb des Hohlraumes 3 befindet und mit welchem eine Position dieses weiteren Permanentmagneten 16 kontinuierlich erfassbar ist, um eine genaue und kostengünstige Lagerückmeldung über eine aktuelle Ventilposition erhalten zu können. Dieser Sensor 17 ist daher üblicherweise mit einer Fahrzeugelektronik verbunden. Hier ist ein mit dem Sensor 17 verbundener elektrischer Kontakt 28 vorgesehen, über welche ein Sensorsignal an die Fahrzeugelektronik übermittelt werden kann.

Das Mitnehmerstück 9 ist lösbar mit dem Verschluss 8 verbunden, sodass das Ventil 1 durch Austausch des Gehäuses 2 samt Verschluss 8 bzw. einer hydraulischen Einheit des Ventils 1 sehr einfach umgebaut werden kann, beispielsweise von einem 3/2-Wegeventil auf ein 2/2-Wegeventil. Somit kann die erfindungsgemäße Verstelleinheit bei unterschiedlichsten Ventilen 1 auf einfache Weise eingesetzt werden.

Ein erfindungsgemäßes Ventil 1 ist einerseits einfach und leichtgewichtig im Aufbau und gleichzeitig auf effiziente Weise betätigbar, zumal Energie nur zugeführt werden muss, wenn eine Schaltposition des Ventils 1 geändert wird. Dadurch ist ein derartiges Ventil 1 auch besonders gut für Elektrofahrzeuge geeignet.

## Patentansprüche

1. Verstelleinheit für ein Ventil (1) für ein Kraftfahrzeug, insbesondere für einen Kühlmittelkreislauf in einem Kraftfahrzeug, wobei das Ventil (1) ein Gehäuse (2) mit einem Hohlraum (3) aufweist, in welchen ein Einlass (4) und ein Auslass (5) münden, wobei der Einlass (4) mit dem Auslass (5) in einem geöffneten Zustand des Ventils (1) durch einen durch den Hohlraum (3) verlaufenden Strömungspfad (6) verbunden ist, wobei das Ventil (1) eine zwischen dem Einlass (4) und dem Auslass (5) entlang des Strömungspfades (6) im Hohlraum (3) angeordnete Ventilöffnung (7) und einen Verschluss (8) aufweist, welcher Verschluss (8) relativ zum Gehäuse (2) des Ventils (1) von einer ersten Position in eine zweite Position bewegbar ist, wobei der Verschluss (8) die Ventilöffnung (7) in der ersten Position zu einem geringeren Grad als in der zweiten Position verschließt, wobei die Verstelleinheit zum Bewegen des Verschlusses (8) mittels eines Mitnehmerstückes (9) ausgebildet ist, **dadurch gekennzeichnet, dass** die Verstelleinheit einen mit dem Mitnehmerstück (9) verbundenen Kolben (10) aufweist, welcher zwischen einer ersten Endposition und einer zweiten Endposition entlang eines Verstellweges (11) bewegbar ist, wobei zumindest ein Permanentmagnet (12) vorgesehen ist, durch welchen der Kolben (10) gehalten wird, wenn sich der Kolben (10) in einer der Endpositionen befindet, wobei ferner eine Spule vorgesehen ist und der Kolben (10) durch Bestromung der Spule von einer Endposition weg bewegt werden kann, um das Ventil (1) zumindest teilweise zu öffnen oder zu schließen.

2. Verstelleinheit nach Anspruch 1, **dadurch gekennzeichnet, dass** der zumindest eine Permanentmagnet (12) und der Kolben (10) derart ausgestaltet sind, dass der Kolben (10) mit einer Kraft, welche zumindest der 10-fachen Gewichtskraft des Kolbens (10) entspricht, insbesondere mit einer Kraft, welche zumindest der 20-fachen Gewichtskraft des Kolbens (10) entspricht, in einer Endposition gehalten wird.

3. Verstelleinheit nach Anspruch 1 oder 2, **dadurch gekennzeichnet, dass** ein erster magnetischer Kreis (15) vorgesehen ist, welcher durch den Kolben (10) geschlossen wird, wenn sich der Kolben (10) in der ersten Endposition befindet, und ein zweiter magnetischer Kreis (15) vorgesehen ist, welcher durch den Kolben (10) geschlossen wird, wenn sich der Kolben (10) in der zweiten Endposition befindet.

4. Verstelleinheit nach Anspruch 3, **dadurch gekennzeichnet, dass** der erste magnetische Kreis (15) und der zweite magnetische Kreis (15) einen gemeinsamen Permanentmagneten (12) aufweisen.

5. Verstelleinheit nach Anspruch 4, **dadurch gekennzeichnet, dass** mit dem Mitnehmerstück (9) ein weiterer Permanentmagnet (12) (16) verbunden ist, sodass eine Bewegung des Mitnehmerstückes (9) entlang des Verstellweges (11) eine Bewegung des weiteren Permanentmagneten (12) (16) bewirkt, wobei ein Sensor (17) vorgesehen ist, mit welchem eine Position des weiteren Permanentmagneten (12) (16) erfassbar ist.

6. Verstelleinheit nach Anspruch 5, **dadurch gekennzeichnet, dass** der Sensor (17) derart vom weiteren Permanentmagneten (12) (16) beabstandet ist, dass, wenn die Verstelleinheit mit dem Ventil (1) verbunden ist, der weitere Permanentmagnet (12) (16) innerhalb des Hohlraumes (3) und der Sensor (17) außerhalb des Hohlraumes (3) angeordnet sind.

7. Verstelleinheit nach einem der Ansprüche 1 bis 6, **dadurch gekennzeichnet, dass** der Kolben (10) innerhalb der Spule bewegbar angeordnet ist.

8. Verstelleinheit nach Anspruch 7, **dadurch gekennzeichnet, dass** die Spule zwei in axialer Richtung beabstandete Spulenteile (14) aufweist, wobei zwischen den Spulenteilen (14) der Permanentmagnet (12) angeordnet ist, welcher magnetisch einerseits mit einem Teil des Verfahrweges und andererseits über ein radial außerhalb der Spulenteile (14) angeordnetes magnetisches Bauteil, insbesondere ein ferromagnetisches Bauteil, mit einem an der ersten Endposition angeordneten ersten Polkern (18) und/oder einem an der zweiten Endposition angeordneten zweiten Polkern (18) verbunden ist.

9. Verstelleinheit nach einem der Ansprüche 1 bis 8, **dadurch gekennzeichnet, dass** der Kolben (10) über in Polkernen (18) angeordnete Lagern (19) translatorisch bewegbar gelagert ist.

10. Verstelleinheit nach einem der Ansprüche 1 bis 9, **dadurch gekennzeichnet, dass** eine Dichtung vorgesehen ist, welche den Kolben (10) fluidisch von der Spule trennt, wenn die Verstelleinheit mit einem Ventil (1) verbunden ist.

11. Verstelleinheit nach einem der Ansprüche 1 bis 10, **dadurch gekennzeichnet, dass** die Dichtung als tiefgezogene Dichthülse (20) ausgebildet ist, welche innerhalb der Spule zwischen Spule und Kolben (10) angeordnet ist.

12. Verstelleinheit nach einem der Ansprüche 1 bis 11, **dadurch gekennzeichnet, dass** eine den Kolben (10) mit dem Mitnehmerstück (9) verbindende Achse (21) vorgesehen ist, welche durch eine Ankerdichtung (22) geführt und relativ zur Ankerdichtung (22), welche starr mit der Spule verbunden ist, entlang des Verstellweges (11) bewegbar ist.

13. Ventil (1) für ein Kraftfahrzeug, insbesondere für einen Kühlmittelkreislauf in einem Kraftfahrzeug, wobei das Ventil (1) ein Gehäuse (2) mit einem Hohlraum (3) aufweist, in welchen ein Einlass (4) und ein Auslass (5) münden, wobei der Einlass (4) mit dem Auslass (5) in einem geöffneten Zustand des Ventils (1) durch einen durch den Hohlraum (3) verlaufenden Strömungspfad (6) verbunden ist, wobei das Ventil (1) eine zwischen dem Einlass (4) und dem Auslass (5) entlang des Strömungspfades (6) im Hohlraum (3) angeordnete Ventilöffnung (7) und einen Verschluss (8) aufweist, welcher Verschluss (8) relativ zum Gehäuse (2) des Ventils (1) von einer ersten Position in eine zweite Position bewegbar ist, wobei der Verschluss (8) die Ventilöffnung (7) in der ersten Position zu einem geringeren Grad als in der zweiten Position verschließt, wobei eine Verstelleinheit zum Bewegen des Verschlusses (8) mittels eines Mitnehmerstückes (9) vorgesehen ist, **dadurch gekennzeichnet, dass** die Verstelleinheit nach einem der Ansprüche 1 bis 12 ausgebildet ist.

14. Ventil (1) nach Anspruch 13, **dadurch gekennzeichnet, dass** das Ventil (1) als 3/2-Wegeventil ausgebildet ist.

15. Ventil (1) nach Anspruch 13, **dadurch gekennzeichnet, dass** das Ventil (1) als 2/2-Wegeventil ausgebildet ist.

16. Ventil (1) nach einem der Ansprüche 13 bis 15, **dadurch gekennzeichnet, dass** die Verstelleinheit lösbar mit dem Gehäuse (2) verbunden ist.
